# EUROPÄISCHE PATENTANMELDUNG

(11) **EP 1 561 657 A2**
(43) Veröffentlichungstag der Anmeldung: **10.08.2005**
(21) Anmeldenummer: 05001253.3
(22) Anmeldetag: 21.01.2005
(51) Int. Cl.: B60S 3/04

(54) **Vorrichtung zum Reinigen von Felgen**

(30) Priorität: 03.02.2004 DE 202004001660 U
(71) Anmelder: Samyn, Joel, 78234 Engen (DE)
(72) Erfinder: Samyn, Joel, 78234 Engen (DE)
(74) Vertreter: Weiss, Peter, Dr.

(57) **Zusammenfassung**

Bei einer Vorrichtung zum Reinigen von Felgen von Fahrzeugen mit einem Reinigungselement (3, 3.1, 3.2), insbesondere Bürste, soll das Reinigungselement (3, 3.1, 3.2) mit einem tragbaren Motor (8) in einem Antriebsgehäuse (1) verbunden sein, der das Reinigungselement (3, 3.1, 3.2) bewegt, insbesondere dreht.

## Beschreibung

Die Erfindung betrifft eine Vorrichtung zum Reinigen von Felgen von Fahrzeugen mit einem Reinigungselement, insbesondere Bürste.

### Stand der Technik

Das Reinigen von Felgen stellt heute eine erhebliche Mühe dar, zumal die Felgen nicht nur mit relativ einfach zu entfernendem Strassendreck verschmutzt sind, sondern vor allem auch mit Partikeln vom Bremsenabrieb, die sehr fest auf den Felgen haften und nur mit scharfen Mitteln und erheblichen Reibanstrengungen zu beseitigen sind. Um in kleinere Zwischenräume zu kommen, behilft sich der Fahrzeugbesitzer heute sogar mit Zahnbürsten od. dgl. kleinsten Reinigungsmitteln. Dennoch benötigt das Reinigen von Felgen einen erheblichen Zeitaufwand und körperliche Anstrengung.

In normalen Waschanlagen findet ebenfalls ein Reinigen von Felgen statt, das durch rotierende Bürsten durchgeführt wird. Das Reinigungsergebnis ist äusserst mangelhaft, da nur die Oberfläche der Felgen gereinigt wird.

### Aufgabe

Der vorliegenden Erfindung liegt die Aufgabe zugrunde, eine Vorrichtung der oben genannten Art zu schaffen, mit der ein Reinigen von Felgen schnell und ohne grosse Anstrengung möglich ist.

### Lösung der Aufgabe

Zur Lösung der Aufgabe führt, dass das Reinigungselement mit einem tragbaren Motor in einem Antriebsgehäuse verbunden ist, der das Reinigungselement bewegt, insbesondere dreht.

Die vorliegende Erfindung hat den Vorteil, dass dem Menschen das mühevolle Bewegen von Reinigungselementen gegenüber der Oberfläche der Felge abgenommen wird. Dies übernimmt ein Motor, der tragbar, d. h., klein und leicht ausgestaltet ist. Hierzu dient bevorzugt ein kleiner Elektromotor, der mit der Bordelektronik in Verbindung steht. Das heisst, diesem Elektromotor genügt ein 12 V bis 24 V-Anschluss, wobei solche Elektromotoren handelsüblich sind, da sie bislang auch für Staubsauger für Fahrzeuge verwendet werden.

Dieser Motor ist über eine Welle mit dem Reinigungselement verbunden. Die Welle ist flexibel, wie dies bspw. von Wellen bekannt ist, welche ein Werkzeug mit einer Bohrmaschine verbinden. Die Welle erlaubt ein Bewegen des Reinigungselementes in eine bevorzugte Reinigungslage.

Um die Handhabbarkeit zu verbessern, ist die Welle in einem Schlauch geführt, der mit dem Antriebsgehäuse verbunden ist, so dass die Welle in dem Schlauch drehen kann, das Reinigungselement aber durch Biegen des Schlauches zusammen mit der Welle bewegt wird. Auch diese Anordnung ist handelsüblich, so dass auf eine nähere Beschreibung verzichtet wird.

Bevorzugt soll das Reinigungselement auswechselbar mit der Welle verbunden sein. Das heisst, für grössere Oberflächen wird ein anderes Reinigungselement benutzt, als bspw. für schmale Zwischenräume oder für Vertiefungen in der Felge. Hier ist dem Erfindungsgedanken keine Grenze gesetzt.

Um eine optimale Kraftübertragung zwischen Motor und Welle zu gewährleisten, wird es ratsam sein, ein Getriebe dazwischen zu schalten. Hier kann es sich bspw. um ein Planetengetriebe mit beliebiger gewünschter Übersetzung handeln.

In einem bevorzugten Ausführungsbeispiel ist der Vorrichtung zum Reinigen von Felgen bzw. dem Reinigungselement eine Versorgung mit Reinigungsflüssigkeit zugeordnet. Bevorzugt erfolgt die Versorgung integriert in der Vorrichtung, d. h., die Vorrichtung besitzt einen Anschluss an eine Quelle für Reinigungsflüssigkeit, bspw. einen Wasseranschluss, und eine Leitung, die zu dem Reinigungselement führt. Bevorzugt befindet sich diese Leitung innerhalb des oben erwähnten Schlauches oder auch innerhalb der Welle. In diesem Fall ist dann an dem Antriebsgehäuse ein Wasseranschluss vorgesehen.

Sollte keine Anschlussmöglichkeit an bspw. eine städtische Wasserversorgung vorhanden sein, könnte Wasser auch aus einem Kanister oder ähnlichem Speicher entnommen werden. Hierzu ist eine kleine Wasserpumpe vorgesehen, die dem Wasseranschluss am Antriebsgehäuse zugeordnet ist und die ebenfalls an die Bordelektrik angeschlossen werden kann.

Insgesamt wird eine sehr handhabbare und leicht zu gebrauchende Vorrichtung zum Reinigen von Felgen geschaffen, mit der Felgen schnell, gründlich und ohne erheblichen körperlichen Aufwand gereinigt werden können.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf eine schematisch dargestellte Vorrichtung zum Reinigen von Felgen;
Figuren 2 und 3 Draufsichten auf weitere Ausführungsbeispiele von Reinigungselementen.

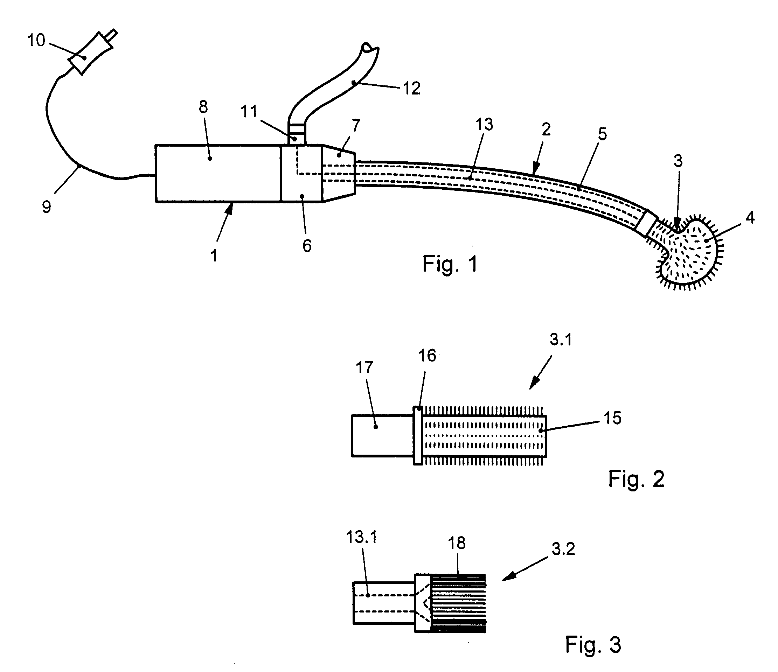

Gemäss Figur 1 ist mit einem Antriebsgehäuse 1 ein flexibler Schlauch 2 verbunden, aus dem endwärtig ein Reinigungselement 3 herausragt. Dieses Reinigungselement 3 ist als eine beliebig gestaltete Bürste ausgebildet. Hierzu besitzt es auf seiner Oberfläche Borsten 4.

Das Reinigungselement 3 ist, bevorzugt lösbar, mit einer Welle 5 verbunden, die den flexiblen Schlauch 2 durchzieht und nur gestrichelt dargestellt ist. Die Verbindung kann bspw. durch ein Aufschrauben erfolgen.

Anderenends ist die Welle 5 mit einer nicht näher gezeigten Antriebswelle verbunden, die aus einem Getriebe 6 in ein Anschlussstück 7 einragt, welches wiederum mit dem flexiblen Schlauch 2 verbunden ist. Dieses Anschlussstück 7 zusammen mit dem Getriebe 6 und einem Motor 8 bildet das Antriebsgehäuse 1.

Der Motor 8 steht über eine Versorgungsleitung 9 mit einem Anschlusselement 10 an eine Stromversorgung in Verbindung. Dieses Anschlusselement 10 ist bevorzugt so ausgestaltet, dass es an einen Zigarettenanzünder angeschlossen werden kann.

Dem Antriebsgehäuse 1 ist ferner ein Wasseranschluss 11 zugeordnet, der mit einem Wasserschlauch 12 verbunden werden kann. Vom Wasseranschluss 11 führt eine nur schematisch und nur gestrichelt angedeutete Leitung 13 durch den Schlauch bzw. die Welle 5 zu dem Reinigungselement 3, aus dem Wasser auf beliebige Art und Weise austreten kann.

Bevorzugt ist das Reinigungselement 3, wie oben erwähnt, austauschbar mit der Welle 5.

In Figur 2 ist ein weiteres Ausführungsbeispiel eines Reinigungselementes 3.1 gezeigt. Dessen Oberfläche 14 ist mit Elementen 15 einer Klettverbindung belegt, also entweder mit Haken oder mit Flauschmaterial. Dieser Oberfläche 14 kann bspw. ein Poliertuch zugeordnet werden, welches das jeweils andere Element der Klettverbindung aufweist.

Ein Anschlagring 16 verhindert ein Eintauchen des Reinigungselementes 3.1 in den Schlauch 2. Ein Anschluss 17 dient dem Anschliessen an die Welle 5.

Bei dem Reinigungselement 3.2 gemäss Figur 3 handelt es sich um ein Reinigungselement vor allem zur Reinigung von Bohrungen und Radbolzen. Aus diesem Grunde ist dieses Reinigungselement 3.2 rund ausgestaltet und besitzt eine kreisförmige Borstenanordnung 18. Gestrichelt sind Teile 13.1 der Wasserleitung dargestellt.

Die Funktionsweise der vorliegenden Erfindung ist folgende:

Im bevorzugten Ausführungsbeispiel ist mit der Welle 5 ein gewünschtes Reinigungselement 3, 3.1 oder 3.2 verbunden. Der Wasserschlauch 12 ist an eine entsprechende Wasserleitung angeschlossen und an dem Wasseranschluss 11 des Antriebsgehäuses 1. Der Motor 8 ist über die Versorgungsleitung 9 und das Anschlusselement 10 (Stecker) mit dem Zigarettenanzünder eines Fahrzeuges verbunden. Das Antriebsgehäuse 1, welches eine Länge von 160 mm, einen Durchmesser von 42 mm und ein Gewicht von 600 g aufweist, ist leicht tragbar und leicht handhabbar. Der Motor 8 ist ein 12 V bis 24 V-Motor. Seine Drehbewegung wird über ein Planetengetriebe 1 zu 10 übersetzt.

Falls der Wasserschlauch 12 nicht an eine Wasserleitung angeschlossen werden kann, wie z. B. auf einem Campingplatz, besteht auch die Möglichkeit, zwischen einem entsprechenden Wasserkanister und dem Wasseranschluss 11 in den Schlauch 12 eine Wasserpumpe einzuschalten und diese ebenfalls mit Energie aus dem Fahrzeug zu speisen.

Zum Reinigen der Felgen wird nun der Motor 8 in Gang gesetzt, wodurch, übersetzt über das Getriebe 6, die Welle 5 in Drehbewegung versetzt wird. Diese Drehbewegung wird auf das Reinigungselement 3 übertragen, wodurch die Oberfläche und grössere Zwischenräume der Felge gereinigt werden können. Für kleinere Zwischenräume sind andere Reinigungselemente vorgesehen, die auf die Welle 5 aufgesetzt werden können. Für Bohrungen und Radbolzen ist das Reinigungselement 3.2 vorgesehen, welches besonders gut zur Reinigung von ringförmigen Vertiefungen eingesetzt werden kann.

### Positionszahlenliste

| | | | | | |
|---|---|---|---|---|---|
| 1 | Antriebsgehäuse | 34 | | 67 | |
| 2 | flexibler Schlauch | 35 | | 68 | |
| 3 | Reinigungselement | 36 | | 69 | |
| 4 | Borsten | 37 | | 70 | |
| 5 | Welle | 38 | | 71 | |
| 6 | Getriebe | 39 | | 72 | |
| 7 | Anschlussstück | 40 | | 73 | |
| 8 | Motor | 41 | | 74 | |
| 9 | Versorgungsleitung | 42 | | 75 | |
| 10 | Anschlusselement | 43 | | 76 | |
| 11 | Wasseranschluss | 44 | | 77 | |
| 12 | Wasserschlauch | 45 | | 78 | |
| 13 | Leitung | 46 | | 79 | |
| 14 | Oberfläche | 47 | | | |
| 15 | Element | 48 | | | |
| 16 | Anschlagring | 49 | | | |
| 17 | Anschluss | 50 | | | |
| 18 | kreisförmige Borstenanordnung | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Reinigen von Felgen von Fahrzeugen mit einem Reinigungselement (3, 3.1, 3.2), insbesondere Bürste,
**dadurch gekennzeichnet,**
**dass** das Reinigungselement (3, 3.1, 3.2) mit einem tragbaren Motor (8) in einem Antriebsgehäuse (1) verbunden ist, der das Reinigungselement (3, 3.1, 3.2) bewegt, insbesondere dreht.

2. Vorrichtung nach Anspruch 1, **dadurch gekennzeichnet, dass** der Motor (8) über eine Versorgungsleitung (9) mit der Stromversorgung des Fahrzeuges verbindbar ist.

3. Vorrichtung nach Anspruch 1 oder 2, **dadurch gekennzeichnet, dass** der Motor (8) über eine Welle (5) mit dem Reinigungselement (3, 3.1, 3.2) verbunden ist.

4. Vorrichtung nach Anspruch 3, **dadurch gekennzeichnet, dass** die Welle (5) einen Schlauch (2) zwischen Motor (8) und Reinigungselement (3, 3.1, 3.2) durchzieht.

5. Vorrichtung nach Anspruch 3 oder 4, **dadurch gekennzeichnet, dass** das Reinigungselement (3, 3.1, 3.2) auswechselbar mit der Welle (5) verbunden ist.

6. Vorrichtung nach wenigstens einem der Ansprüche 1 bis 5, **dadurch gekennzeichnet, dass** zwischen Motor (8) und Reinigungselement (3, 3.1, 3.2) ein Getriebe (6), insbesondere ein Planetengetriebe vorgesehen ist.

7. Vorrichtung nach wenigstens einem der Ansprüche 1 bis 6, **dadurch gekennzeichnet, dass** dem Reinigungselement (3, 3.1, 3.2) eine Versorgung mit Reinigungsflüssigkeit zugeordnet ist.

8. Vorrichtung nach Anspruch 7, **dadurch gekennzeichnet, dass** in der Welle (5) und/oder innerhalb des Schlauches (2) eine Leitung (13) für die Reinigungsflüssigkeit vorgesehen ist.

9. Vorrichtung nach Anspruch 7 oder 8, **dadurch gekennzeichnet, dass** dem Antriebsgehäuse (1) ein Wasseranschluss (11) und ggf. eine Wasserpumpe zugeordnet ist.
